# EUROPÄISCHE PATENTSCHRIFT

(11) **EP 3 295 526 B1**
(45) Veröffentlichungstag und Bekanntmachung des Hinweises auf die Patenterteilung: **17.03.2021**
(21) Anmeldenummer: 16719761.5
(22) Anmeldetag: 13.04.2016
(51) Int. Cl.: H01R 13/74, F16B 21/18

(54) **HF-BAUGRUPPE**
HF MODULE
MODULE HF

(30) Priorität: 08.05.2015 DE 102015107226
(43) Veröffentlichungstag der Anmeldung: 21.03.2018
(73) Patentinhaber: Telefonaktiebolaget LM Ericsson (Publ), 164 83 Stockholm (SE)
(72) Erfinder: HAUNBERGER, Thomas, 83435 Bad Reichenhall (DE); HEFELE, Jürgen, 83666 Waakirchen/Schaftlach (DE); STOHN, Sebastian, 83109 Grosskarolinenfeld (DE); SURMA, Markus, 83109 Großkarolinenfeld (DE)
(74) Vertreter: Röthinger, Rainer
(86) Internationale Anmeldenummer: PCT/DE2016/100173
(87) Internationale Veröffentlichungsnummer: WO 2016/180398

(56) Entgegenhaltungen:
- DE-A1- 2 612 624
- DE-A1-102006 015 718
- US-A1- 2002 185 327
- US-A1- 2011 318 951
- US-B1- 7 547 230

## Beschreibung

Die Erfindung betrifft eine HF-Baugruppe gemäß Patentanspruch 1. In der Antennentechnik werden zahlreiche HF-Steckverbindungen, also Steckverbindungen für Hochfrequenz-(HF)-Anwendungen, in unterschiedlicher Ausgestaltung verwendet. Solche HF-Steckverbindungen dienen dazu, eine HF-Buchse oder mehrere HF-Buchsen in Durchlassöffnungen von wandförmigen HF-Baugruppen, auch als Montagewände für HF-Baugruppen bezeichnet und beispielsweise als Antennendeckel ausgeführt, zu stecken, hinter dem die Antenne mit allen zugehörigen Komponenten angeordnet ist. Eine solche Anordnung ist vor allem bei Mobilfunkantennenarrays geläufig. Ein Hauptproblem bei der Montage ist es, die HF-Buchse so auf den Deckel zu montieren, dass diese fest sitzt. Dies ist wichtig, um ein Ausleiern der Verbindung und damit ein Ausreißen der Buchse zu verhindern, da auf diese größere Kräfte wirken können.

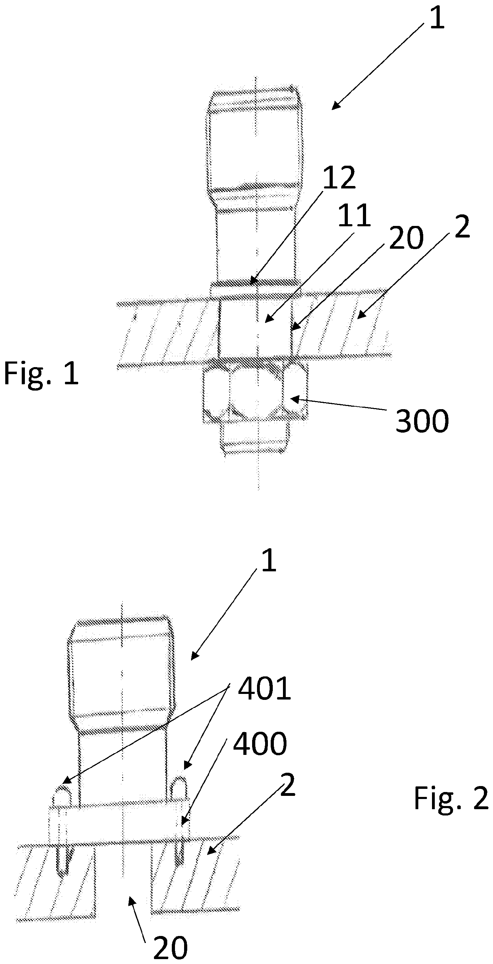

In Figur 1 ist eine herkömmliche Befestigung für HF-Buchsen gezeigt. Hier wird nach dem Einstecken der HF-Buchse 1 in die Durchlassöffnung 20 des Antennendeckels 2 diese mittels beispielsweise einer Mutter 300 von der Rückseite des Antennendeckels 2 her befestigt. Die HF-Buchse wird bis zu einem Abschluss-Steg 12 in die Durchlassöffnung 20 des Antennendeckels 2 geschoben bzw. gesteckt. Um eine Mutter 300 anzubringen, muss ein Bereich eines Befestigungshalses 11 der HF-Buchse 1 über die Durchlassöffnung 20 des Antennendeckels 2 zur Unterseite des Antennendeckels 2 hinaus ragen und ein Gewinde (nicht gezeigt) aufweisen. Die Mutter 300 wird mittels eines Werkzeugs auf das Gewinde geschraubt. Beim Festschrauben dient der Abschluss-Steg 12 als eine Art Beilag- oder Unterlegscheibe, so dass eine Verteilung der durch das Anschrauben der Mutter 300 wirkenden Kraft ermöglicht wird. Nachteilig bei dieser Befestigungsmethode ist, dass ein genaues Aufschrauben der Mutter erfolgen muss, um kein Verkanten zu verursachen. Ferner ist das Anbringen von Schraubverbindungen zeitraubend und damit kostenintensiv. Auch kann es bei Platzmangel schwierig sein, das Werkzeug zum Festziehen zu verwenden.

In Figur 2 ist eine weitere typische Befestigungsart für HF-Buchsen 1 an einem Antennendeckel 2 gezeigt. Hier ist die HF-Buchse 1 auf einer Montageplatte 400 angebracht, die größer ist als die Durchlassöffnung 20 des Antennendeckels 2. Die Montageplatte 400 wird auf der Oberseite des Antennendeckels 2, also der der HF-Buchse 1 zugewandten Seite, mittels mehreren Schrauben 401 an ihren äußeren Enden befestigt. Nachteilig bei dieser Befestigungsmethode ist, dass hier bis zu vier Schrauben befestigt werden müssen, was einen enormen Zeitaufwand darstellt. Zusätzlich wird durch die Montageplatte sehr viel Platz benötigt, was bei Anwendungen, bei denen viele Buchsen auf kleinem Raum montiert werden müssen, sehr nachteilig sein kann. Durch die Verwendung zusätzlicher Bauteile wie etwa Schrauben erhöhen sich ferner die Kosten.

Eine Alternative Befestigungsmethode ist in der DE102010014154 B4 beschrieben. Hier weist ein hülsenförmiges Anschlussstück zur Aufnahme des Innen- und Außenleiters des Gehäusekupplers wenigstens einen Bereich auf, der mit einer Gehäusewand des elektrisch/elektronischen Gerätes wenigstens abschnittsweise eine Formschlussverbindung eingeht. Das Anschlussstück des Gehäusekupplers ist hierbei mit der Gehäusewand bevorzugt einstückig ausgebildet. Der bzw. die Innen- und Außenleiter können dann durch das Anschlussstück geführt und befestigt werden.

Eine weitere gängige Befestigungsmethode ist die sogenannte Push-Pull-Verriegelung, die beispielsweise in der nicht mehr anhängigen Patentschrift DE 000004439852 C2 beschrieben ist. Diese Befestigungsmethode bezieht sich allerdings auf die Verbindung zwischen Buchse und Stecker und nicht auf die Verbindung zwischen Buchse und Deckel. Vorteilhaft bei dieser Verbindungsart ist, dass sie nicht mittels eines Werkzeugs verschraubt werden muss. Allerdings ist sie einerseits teuer und stellt auch nicht sicher, dass die HF-Buchse so befestigt ist, dass sie sich nicht bewegen kann, da diese Art der Verriegelung nicht sehr stabil gegen Torsionsbelastungen ist. Auch aus diesem Grund ist eine erfindungsgemäße Verwendung als Verbindung zwischen Buchse und Deckel nicht vorteilhaft.

US 2002/185327 A1 offenbart eine Baugruppe gemäss dem Oberbegriff des Anspruchs 1. Deshalb ist es eine Aufgabe dieser Erfindung, eine HF-Baugruppe bereitzustellen, durch welche die oben genannten Probleme überwunden werden. Speziell soll eine HF-Steckverbindung bereitgestellt werden, die einfach montiert und demontiert werden kann, und die dabei eine im Wesentlichen spielfreie Verbindung zwischen HF-Buchse und Montagewand herstellt.

Diese Aufgabe wird erfindungsgemäß durch die Merkmale des Patentanspruchs 1 gelöst. Vorteilhafte Ausgestaltungen sind Gegenstand der abhängigen Ansprüche.

Vorgeschlagen wird erfindungsgemäß eine HF-Baugruppe, die eine Kombination aus einem HF-Steckelement und einem federnden Sicherungselement umfasst, durch das eine Fixierung, bevorzugt eine im Wesentlichen spielfreie, Befestigung der HF-Buchse an einer Montagewand wie einem Antennendeckel ohne Schraubverbindungen erreicht wird.

Nachfolgend wird zuerst das HF-Steckelement der erfindungsgemäßen HF-Steckverbindung genauer beschrieben. Danach wird das Sicherungselement der erfindungsgemäßen HF-Steckverbindung im Detail beschrieben. Einzelne Ausführungsbeispiele werden später unter Bezugnahme auf die Zeichnung näher erläutert. Die Beschreibung bezieht sich immer auf eine einzelne HF-Steckverbindung und eine Durchlassöffnung etc. Allerdings dient dies nur zur Veranschaulichung des Prinzips der Erfindung. Wenn mehrere HF-Steckverbindungen auf einer Montagewand angeordnet werden sollen, kann die Erfindung auf jede einzelne HF-Steckverbindung und jede einzelne Durchlassöffnung etc. übertragen werden.

### HF-Steckelement

Das erfindungsgemäße HF-Steckelement der HF-Baugruppe kann in einem Ausführungsbeispiel eine HF-Buchse sein. HF-Buchsen bestehen normalerweise aus einer mechanischen Baugruppe, also hauptsächlich einer Montagewand, und einer elektrischen Baugruppe, die von der mechanischen Baugruppe umgeben ist bzw. in diese eingeführt ist und von dieser geschützt wird. In einem alternativen Ausführungsbeispiel kann das HF-Steckelement auch lediglich die elektrische Baugruppe sein, die sich normalerweise im Inneren der mechanischen Baugruppe befindet, also beispielsweise Innen- und Außenleiter. Das HF-Steckelement ist wie nachfolgend beschrieben ausgebildet.

Das an der Montagewand einer HF-Baugruppe wie einer Antenne zu befestigende HF-Steckelement weist erfindungsgemäß einen Befestigungshals auf, der über eine Durchgangsöffnung der Montagewand in diesen eingesteckt werden kann. Zusätzlich weist das HF-Steckelement einen Verbindungsbereich auf, an den das Sicherungselement aufgesteckt wird. Der Verbindungsbereich ist derart geformt, dass gewährleistet wird, dass das Sicherungselement zwischen dem Verbindungsbereich und der Montagewand an dem HF-Steckelement fixiert werden kann. In der ersten oben genannten Ausführungsform gehen das Sicherungselement und die HF-Steckverbindung somit eine spielfreie Verbindung ein bzw. das Sicherungselement umgibt das HF-Steckelement spielfrei. In der zweiten oben genannten Ausführungsform ist diese Verbindung nicht zwingend spielfrei.

Unter spielfrei ist eine Fixierung der Komponenten zu verstehen, die diesen Komponenten nach der Montage keinen Bewegungsfreiraum lässt, d.h. die Komponenten können sich nicht mehr gegeneinander oder miteinander frei bewegen, d.h. es besteht eine form- bzw. kraftschlüssige Fixierung. Bevorzugt ist keinerlei Bewegungsfreiraum zwischen den Komponenten vorhanden.

Es kann aber auch eine geringe Toleranz bzw. ein geringes Spiel zwischen den Komponenten zugelassen werden. Dieses Spiel muss so gering sein, dass mechanische oder sonstige Belastungen keinen Einfluss auf die Fixierung und damit die Funktionstüchtigkeit der Komponenten haben, d.h. es darf durch das Spiel nur eine minimale Bewegung erfolgen können.

Ein weiterer Vorteil des vorgeschlagenen Verbindungsbereichs ist, dass dieser für den Lötvorgang, bei dem ein Kabel an dem HF-Steckelementbefestigt wird, als Wärmefalle genutzt werden kann. Somit wird beim Löten das HF-Steckelement im oberen Bereich weniger erwärmt.

Ferner wird in der ersten oben genannten Ausführungsform durch den Befestigungshals beim Einstecken des HF-Steckelements in die entsprechende Durchgangsöffnung der Montagewand ein Teil des Inneren der Durchgangsöffnung der Montagewand, beispielsweise eines Antennendeckels, spanend bearbeitet. Das heißt, dass ein Teil des Materials des Inneren der Durchgangsöffnung der Montagewand, beispielsweise eines Antennendeckels, durch das Einschieben bzw. Einstecken abgetragen bzw. weggeschabt oder verformt bzw. verpresst wird. Dies kann dadurch geschehen, dass der Befestigungshals des HF-Steckelements und auch die Montagewand der HF-Baugruppe bzw. die Durchlassöffnung ein Material und eine Struktur aufweist, die dies ermöglicht. Wichtig ist hierbei, dass die Struktur derart ausgebildet ist, dass das HF-Steckelement in der Durchgangsöffnung nach dem Einstecken spielfrei fixiert ist. Das heißt für die Struktur, dass die Struktur des Befestigungshalses des HF-Steckelements zumindest in Teilbereichen eine andere sein sollte als die Struktur des Inneren der Durchgangsöffnung. Beispielsweise kann das Innere der Durchgangsöffnung kreisförmig sein. Dann sollte die Struktur des Befestigungshalses des HF-Steckelements nicht vollständig kreisförmig sein, sondern beispielsweise die Form eines Mehrkants, z.B. eines Drei-, Fünf- oder Sechskants, haben. Zumindest sollte der Befestigungshals einen Bereich aufweisen, der in Zusammenspiel mit dem Inneren der Durchgangsöffnung derart form- bzw. kraftschlüssig fixiert ist, dass ein Drehen des HF-Steckelements nur schwer oder gar nicht möglich ist. Die Struktur kann hierfür eine beliebig komplizierte Geometrie aufweisen, wobei diese durch das Herstellungsverfahren und die Kosten dafür begrenzt sind.

In einem zu dem vorangehenden Ausführungsbeispiel alternativen Ausführungsbeispiel weist die Montagewand eine entsprechende Struktur auf. Die Wahl, ob die Struktur in dem Inneren der Durchgangsöffnung der Montagewand, z.B. eines Antennendeckels, bereitgestellt wird oder am Befestigungshals des HF-Steckelements, hängt hauptsächlich von den Herstellungskosten und dem Material der Montagewand und den Kosten für die Bereitstellung der Struktur auf dem Befestigungshals ab. Die Montagewand wird bevorzugt aus einem nicht-leitenden Material hergestellt, kann aber auch aus einem leitenden Material bestehen, das behandelt wurde, um nicht-leitend zu werden. Es kann beispielsweise eloxiert werden oder mit einem Kunststoff ummantelt. Alternativ kann in die Durchgangsöffnung ein nicht-leitendes Einlegeteil zwischen dem Inneren der Durchgangsöffnung der Montagewand und dem Befestigungshals des HF-Steckelements eingebracht werden. Das Einlegeteil muss derart befestigt sein, dass es bei Einschieben bzw. Einstecken des HF-Steckelements eine spielfreie Verbindung zu beiden Seiten hat, d.h. nicht verrutscht und bei Einwirkung von Kräften nicht dazu führt, dass sich das HF-Steckelement bewegen bzw. wackeln kann. Ein Einlegeteil kann sowohl am Befestigungshals als auch am Inneren der Durchgangsöffnung angebracht sein. Wichtig ist bei dieser Anwendung, dass das Material spanend bearbeitet werden kann, also durch Einstecken des HF-Steckelements abgetragen bzw. abgeschabt oder verformt bzw. verpresst werden kann. Hierbei liegt es im Ermessen des Anwenders, ob das HF-Steckelement die Struktur aufweist oder ob sich die Struktur im Inneren der Durchgangsöffnung der Montagewand befindet und durch Einstecken des HF-Steckelements abgetragen bzw. abgeschabt oder verformt bzw. verpresst wird.

In der zweiten oben genannten Ausführungsform weisen der Befestigungshals oder die Innenseite der Montagewand nicht unbedingt eine Struktur wie oben erwähnt auf. Hier sorgt das federnde Sicherungselement hauptsächlich für die Fixierung der Komponenten.

In einer weiteren Ausführung kann an der Durchgangsöffnung der Montagewand eine Einführhilfe angebracht sein, die es dem Monteur erleichtert, das HF-Steckelement in die Durchgangsöffnung einzuführen. Diese Einführhilfe kann eine Einkerbung oder ein Vorsprung sein, welche der Struktur des HF-Steckelements derart angepasst sind, dass sie nur an einer Stelle beim Einführen greifen und somit eine Ausrichtung zum Einführen des Befestigungshalses in die Durchgangsöffnung vorgeben.

In einer Ausführungsform wird das HF-Steckelement mit dem Befestigungshals zuerst in die Montagewand, z.B. einen Antennendeckel, gesteckt, d.h. von oben bzw. von außen. Als oben, Oberseite oder Außenseite wird hier die Seite, die nach der Endmontage der HF-Baugruppe, beispielsweise einer Antenne, von außen zu sehen ist, bezeichnet. Als unten, Unterseite oder Innenseite wird die Seite bezeichnet, die nach der Endmontage der HF-Baugruppe, beispielsweise einer Antenne, von außen nicht mehr zu sehen ist. Bei der Befestigung des HF-Steckelements von oben wird der Befestigungshals des HF-Steckelements durch die Durchgangsöffnung der Montagewand geschoben, so dass ein Verbindungsbereich auf der unteren Seite der Montagewand herausragt und mit der Montagewand einen Raum bildet, in den das Sicherungselement gesteckt wird. Das Aufstecken des Sicherungselements kann entweder von der Seite oder durch Schieben über den Verbindungsbereich erfolgen, so dass eine radiale Umgreifung des HF-Steckelements durch das Sicherungselement erfolgt.

Bei dieser Art der Befestigung ist eines schwierig, nach der Endmontage sicherzustellen, dass jede Buchse mit einem Sicherungselement versehen ist, da dieses nicht mehr außen sichtbar ist. Um eine entsprechende Qualitätssicherung zu gewährleisten, ist in einer Ausführung der Erfindung eine Ausnehmung, beispielsweise in Form eines Loches, neben jedem HF-Steckelement an geeigneter Stelle in der Montagewand, beispielsweise einem Antennendeckel, vorgesehen. Ferner ist es dann vorteilhaft, wenn das Sicherungselement eine Farbe aufweist, die deutlich durch die Ausnehmung zu sehen ist, beispielsweise rot, gelb oder jede andere Signalfarbe. Somit kann durch einfache Sichtkontrolle sichergestellt werden, dass an jedem HF-Steckelements in einem Antennenarray auch ein Sicherungselement angebracht ist.

In einer weiteren Ausführungsform wird das HF-Steckelement von unten in die Montagewand geschoben bzw. gesteckt. Hierbei muss aufgrund der Geometrie des HF-Steckelements die Durchgangsöffnung der Montagewand größer sein als bei der Befestigung von oben. Vorteilhaft ist hier, dass das Sicherungselement von oben über den Verbindungsbereich auf den Befestigungshals des HF-Steckelements oder von der Seite gesteckt wird und somit nach der Endmontage sichtbar ist. Ein weiterer Vorteil dieser Befestigungsart ist es, dass eine axiale Belastung in Richtung nach oben durch den Abschluss-Steg des HF-Steckelements abgefangen wird. Durch die Montage von Antennenarrays, bei denen die obere Seite der Montagewand, also des Antennendeckels nach unten gerichtet ist, wirken Zugkräfte nach unten auf das HF-Steckelement. Diese Zugkräfte können durch den an der Unterseite des Antennendeckels angebrachten Abschluss-Steg abgefangen werden, so dass in dieser Ausführung kein weiteres Sicherungselement an der Unterseite des Antennendeckels angebracht werden muss.

### Sicherungselement

Ein weiterer Bestandteil der erfindungsgemäßen HF-Baugruppe ist ein federndes Sicherungselement, das aufgrund seiner federnden Eigenschaften über den Befestigungshals des HF-Steckelements in den Verbindungsbereich gesteckt bzw. geklemmt werden kann. Das Sicherungselement ist als federndes Element ausgebildet, so dass das Stecken bzw. Klemmen auf das HF-Steckelement derart erfolgen kann, dass eine Vorspannung entsteht, durch die eine spielfreie Befestigung bzw. Fixierung zwischen HF-Steckelement und Sicherungselement entsteht. Durch diese spielfreie Befestigung kann das HF-Steckelement nicht durch Kräfte in axialer Richtung oder durch Torsionskräfte bewegt werden und benötigt zur Fixierung keine Verschraubung oder andere Hilfsmittel. Ferner kann es durch seine Vorspannung Toleranzunterschiede bei der Dicke des Befestigungshalses des HF-Steckelements ausgleichen.

In einer Ausgestaltung der Erfindung kann das Sicherungselement aufgrund seiner federnden Eigenschaften an den Befestigungshals des HF-Steckelements von der Seite her aufgesteckt bzw. geklemmt werden. In einer anderen Ausführungsform kann das Sicherungselement über den Befestigungshals des HF-Steckelements geschoben werden, so dass es den Befestigungshals von oben umklammert. In einer weiteren Ausführungsform ist das Sicherungselement derart ausgeführt, dass es zumindest einen Federarm aufweist.

Die Form des Sicherungselements hängt von der Art der Befestigung an dem HF-Steckelement ab. Beispielsweise kann ein Sicherungselement, das von der Seite auf den Befestigungshals des HF-Steckelements aufgesteckt wird, eine Hufeisenform aufweisen. Bei einer solchen Form reicht es aus, dass ein Arm des Hufeisens als Federarm ausgebildet ist. Allerdings kann auch der zweite Arm als Federarm ausgebildet sein. Es muss lediglich sichergestellt sein, dass das Sicherungselement über das HF-Steckelement geschoben werden kann und eine Vorspannung nach dem Aufbringen auf das HF-Steckelement aufweist, so dass eine spielfreie Fixierung erfolgen kann. Um die an bestimmten Stellen auftretenden Spannungen zu minimieren kann bei einer solchen Form an der der Öffnung des Hufeisens gegenüber liegenden Seite ein Steg vorgesehen sein. Durch diesen Steg werden die bei einem Auseinanderziehen der Arme des hufeisenförmigen Sicherungselements wirkenden punktuellen Kräfte auf eine größere Fläche verteilt und somit eine Bruchgefahr verringert. Außerdem bietet ein solcher Steg die Möglichkeit, das Sicherungselement mit größerer Kraft aufgrund der größeren Angriffsfläche auf den Befestigungshals zu stecken. Zusätzlich oder alternativ können die Arme zur Öffnung hin dünner werden, da hierdurch die zum Auseinanderdrücken nötige Kraft kleiner wird. Um dennoch einen guten Halt zu gewährleisten, können die Enden der Arme wiederum eine größere Dicke als die Arme selbst aufweisen.

Erfindungsmässig ist es, an den Innenseiten der Arme, also an den ins Innere der Hufeisenform zeigenden Bereichen, eine Schräge vorgesehen, da hierdurch eine Einführhilfe zur Befestigung des Sicherungselements an dem HF-Steckelement erreicht wird. Durch die Schräge muss die Befestigung nicht Kante auf Kante erfolgen, sondern das Sicherungselement kann leichter über den Befestigungshals geschoben bzw. geklemmt werden.

Eine Schräge ist bei jeder der Ausführungen des Sicherungselements vorgesehen, z.B. auch wenn das Sicherungselement ringförmig ist. Je nach Ausführung des Verbindungsbereichs des HF-Steckelements kann die Form des Sicherungselements angepasst werden. Dabei ist bei der Wahl der Ausgestaltung des Sicherungselements darauf zu achten, dass eine möglichst spielfreie Verbindung zwischen Sicherungselement und HF-Steckelement entsteht.

Für diese Ausgestaltung der Erfindung wurde als Beispiel eine Hufeisenform beschrieben. Die Form ist aber nicht auf eine Hufeisenform beschränkt. Vielmehr ist auch eine im Wesentlichen U-Form oder andere Formen möglich, die eine Öffnung in ihrem Umfang aufweisen, so dass sie auf das HF-Steckelement von der Seite befestigt werden können.

Des Weiteren muss ein Sicherungselement, das über den Verbindungsbereich von oben geklemmt wird, dieselben Eigenschaften aufweisen wie ein Sicherungselement, das von der Seite an den Befestigungshals geklemmt wird. Allerdings ist hier keine Öffnung im Umfang des Sicherungselements nötig, um das Sicherungselement von oben auf das HF-Steckelement zu schieben. Es kann ein ringförmiges Sicherungselement verwendet werden, wobei hier die Öffnung des Kreisrings als Öffnung zum Aufstecken des Sicherungselements dient. Wenn das Sicherungselement eine solche Ringform aufweist, muss die gesamte Form federnde Eigenschaften aufweisen, um eine Dehnung beim Aufstecken und nach dem Aufstecken ein Zusammenziehen, so dass eine Vorspannung und damit eine spielfreie Verbindung entsteht, zu gewährleisten. Deshalb muss bei der Wahl des Materials darauf geachtet werden, dass hier größere Federkräfte beim Auseinanderdrücken bzw. -ziehen der Form des Sicherungselements wirken.

In einer weiteren Ausführungsform kann das Sicherungselement über einem daran angebrachten Verbindungssteg mit einem oder mehreren an benachbarten HF-Steckverbindungen anzubringenden Sicherungselementen verbunden sein. Der Verbindungssteg ist bevorzugt zwischen zwei Sicherungselementen angebracht und derart ausgebildet, dass er länger ist als der Verbindungsweg zwischen den HF-Steckverbindungen. Um in den Verbindungsweg eingebracht werden zu können, ist er bevorzugt als federnder Verbindungssteg ausgebildet oder weist an einem Bereich ein Gelenk auf, das dazu eingerichtet ist, im Ausgangszustand einen Knick im Verbindungssteg zu verursachen, so dass der Verbindungssteg verkürzbar ist und damit in den Verbindungsweg eingeführt werden kann. Durch Drücken auf den Knick in Richtung Montagewand wird der Verbindungssteg nach unten gedrückt, die an beiden Enden des Verbindungsstegs angeordneten Sicherungselemente werden somit auf die HF-Steckverbindung mit einer gewissen Spannung gedrückt und können somit eine spielfreie Verbindung damit eingehen. Alternativ kann der Verbindungssteg auch in jeder anderen Position, beispielsweise parallel zur Montageplatte oder in einem Winkel dazu angeordnet werden, je nachdem in welcher Position die Sicherungselemente an dem Verbindungssteg angebracht sind.

Als eine Sicherung dafür, dass der Verbindungssteg in der Position bleibt, kann beispielsweise an dem Gelenk ein weiteres Sicherungsmittel als Zusatzsicherung angebracht werden. Dieses Sicherungsmittel kann ein Stift mit Widerhaken auf seiner Unterseite sein, der über eine Durchgangsbohrung in der Montageplatte gesteckt wird und damit auf der Rückseite mittels der Widerhaken einklickt. Es können aber auch andere Sicherungsmittel verwendet werden. Es muss lediglich sichergestellt sein, dass eine feste Verbindung mit der Montageplatte entsteht, so dass der Verbindungssteg aufgrund der an ihm anliegenden Spannung nicht in seine Ausgangsposition zurückkehren kann bzw. die Sicherungselemente aus den HF-Steckverbindungen ausgeklickt werden.

Um eine Verbindung von mehr als zwei Verbindungsstegen, also mehr als zwei Sicherungselementen zu erzielen, können die Verbindungsstege miteinander beispielsweise über Kreuz verbunden werden. Dies hat den Vorteil, dass lediglich ein Sicherungsmittel für vier Sicherungselemente verwendet werden muss.

Durch die passende Auswahl des Materials des Sicherungselements ist eine intermodulationsfreie Verbindung möglich. Hierbei können Kunststoffe verwendet werden, die möglichst kostengünstig in der Herstellung sind, also z.B. durch Spritzgussverfahren hergestellt werden können. Beispiele hierfür sind PPSU (Polyphenylsulfon), PEI (Polyetherimid) oder PFA (Perfluoralkoxy-Polymere). Bei der Auswahl des Materials für das Sicherungselement ist hauptsächlich darauf zu achten, dass das gewählte Material geeignet ist, mit einer Vorspannung versehen zu sein. Das heißt, dass es bei Aufbringen auf das HF-Steckelement auseinandergezogen werden kann und sich dann selbständig wieder in seine Ausgangsform zusammenziehen möchte, so dass es dadurch den Befestigungshals des HF-Steckelements spielfrei umschließt. Es muss also eine gewisse Elastizität und Festigkeit aufweisen. Ferner muss das Material geeignet sein, Kräfte in axialer Richtung und Kippmomente abzufangen, ohne dabei zu ermüden oder zu brechen. Zusätzlich kann das Sicherungselement derart ausgebildet sein, dass es auch Drehmomente abfangen kann. Außerdem sollte das Sicherungselement eine gute Temperaturfestigkeit aufweisen, wobei die Anforderungen hier je nach Anwendung variieren können. Beispielsweise kann Wärme, die durch Verluste entsteht auf das Sicherungselement und das HF-Steckelement wirken. Obwohl das Sicherungselement nicht-leitend ist, wird es durch die auftretende Verlustleistung und die Erwärmung des HF-Steckelements ebenfalls erwärmt. Auch aus diesem Grund muss das Material Temperaturen von ca. -50 bis zu +130°C oder mehr aushalten, ohne zu schmelzen oder zu Bruch zu gehen. Jedes Material, das diese Eigenschaften aufweist, kann für das Sicherungselement verwendet werden. Bevorzugt ist dieses Material nicht-leitend. Im Falle, dass das Material leitend ist, muss eine Ummantelung oder Behandlung erfolgen, um zu vermeiden, dass durch das Sicherungselement Intermodulation entsteht.

In einer weiteren Ausführung kann das Sicherungselement an einem oder mehreren Bereichen Montagehilfen aufweisen. Diese Montagehilfen können dazu dienen, das vorgespannte Sicherungselement mittels einem Werkzeug auseinanderzuziehen, um es über den Befestigungshals des HF-Steckelements zu schieben bzw. zu klicken. Gleichzeitig kann eine solche Montagehilfe dazu dienen, ein Verriegelungselement auf dem Sicherungselement anzubringen, um dieses zusätzlich abzusichern.

Bei jeder Ausführungsform kann ein weiteres wie oben beschriebenes Verriegelungselement an zumindest einem Bereich des Sicherungselements angebracht werden, um eine zusätzliche Absicherung zu erzielen. Das Verriegelungselement kann an dem Sicherungselement angebracht sein und so ein Ausschnappen des Sicherungselements verhindern. Eine solche Verriegelung des Sicherungselements kann durch beispielsweise eine Klammer mit oder ohne in die Öffnung des Sicherungselements ragendem Keil als Verriegelungselement erfolgen, die in oder an den Montagehilfen angebracht wird, um ein Ausschnappen des Sicherungselements zu verhindern. Alternativ kann an dem Sicherungselement ein Verrastelement angeordnet sein, das mit einem auf der Montagewand angeordneten Gegenstück nach dem Anbringen des Sicherungselements verrastet und somit ein Drehen des Sicherungselements verhindert. Das Gegenstück kann auch Teil der Montagewand sein. Ein solches Verriegelungselement kann eine Klammer sein, die in als Montageelement dienende Löcher eingesteckt wird. Alternativ oder zusätzlich kann an dem Sicherungselement ein oder mehrere Verrastelemente angebracht sein, das bzw. die in Zusammenwirkung mit einem entsprechenden auf der Montagewand, beispielsweise einem Antennendeckel, angeordneten Gegenstück ein Ausschnappen des Sicherungselements nach dem Aufstecken verhindern kann bzw. können, wobei das Gegenstück auch Teil der Montagewand sein kann.

Somit ist ersichtlich, dass aus der erfindungsgemäßen Baugruppe zumindest folgende Vorteile resultieren:
- Es ist keine Verschraubung nötig, wodurch eine schnelle und einfach Montage und Demontage erreicht wird.
- Es wird eine spielfreie Befestigung bereitgestellt.
- Eine Torsionsbelastung wird an mehreren Stellen bzw. Flächen des eingesteckten Befestigungshalses in der Durchgangsöffnung abgefangen.
- Eine Belastung in axialer Richtung wird durch das Sicherungselement abgefangen.
- Durch die Vorspannung des Sicherungselements werden Toleranzunterschiede des Durchmessers des HF-Steckelements ausgeglichen.
- Durch die Wahl des Materials des Sicherungselements kann eine intermodulationsfreie Verbindung hergestellt werden.
- Durch die Kompaktheit der Steckverbindung kann eine höhere Packungsdichte mehrerer HF-Steckelemente auf der Montagewand realisiert werden.
- Durch die Kompaktheit der Steckverbindung wird ferner mehr nutzbare Fläche auf der Montagewand zur Verfügung gestellt, beispielsweise um Beschriftungen anzubringen.
- Durch die variable Anbringung der Struktur auf dem Befestigungshals des HF-Steckelements oder dem Inneren der Durchgangsöffnung der Montagewand kann die kostengünstigste Herstellungsvariante gewählt werden.

Weitere oben nicht beschriebene Merkmale und Vorteile der Erfindung ergeben sich aus der nachfolgenden Beschreibung von Ausführungsbeispielen der Erfindung, anhand der Figuren der Zeichnung, die erfindungsgemäße Einzelheiten zeigt, und aus den Ansprüchen. Die einzelnen Merkmale können je einzeln für sich oder zu mehreren in beliebiger Kombination bei einer Variante der Erfindung verwirklicht sein.

Bevorzugte Ausführungsformen der Erfindung werden nachfolgend anhand der beigefügten Zeichnung näher erläutert. Grundsätzlich können ein oder zwei der Arme der in den Figuren beschriebenen Sicherungselemente als Federarme ausgebildet sein. Es zeigen:
Fig. 3 eine Schnittansicht einer HF-Steckverbindung gemäß einer Ausführung der vorliegenden Erfindung.
Fig. 4 eine Schnittansicht einer HF-Steckverbindung gemäß einer alternativen Ausführung der vorliegenden Erfindung.
Figuren 5a bis 5c eine Schnittansicht einer HF-Steckverbindung gemäß einer weiteren alternativen Ausführung der vorliegenden Erfindung.
Fig. 6 beispielhafte Schnittansichten einer Struktur des Befestigungshalses oder des Inneren der Durchlassöffnung der Montagewand, hier eines Antennendeckels, gemäß unterschiedlichen Ausführungen der vorliegenden Erfindung.
Fig. 7a eine Draufsicht auf ein Sicherungselement einer HF-Steckverbindung gemäß einer Ausführung der vorliegenden Erfindung.
Fig. 7b eine Ansicht eines Sicherungselements einer HF-Steckverbindung gemäß einer weiteren Ausführung der vorliegenden Erfindung.
Fig. 7c eine Ansicht eines Sicherungselements einer HF-Steckverbindung gemäß einer weiteren Ausführung der vorliegenden Erfindung.
Figuren 8a bis 8c eine Darstellung eines an einer HF-Steckverbindung angebrachten Sicherungselements aus zwei Teilen mit schrägen Kanten, die nicht Teil der Erfindung ist.
Figuren 9a bis 9d Ansichten von mehreren mit einem Verbindungssteg verbundenen Sicherungselementen gemäß einer Ausführung der vorliegenden Erfindung.
Fig. 10a und 10b eine Ansicht einer Einführhilfe gemäß einer Ausführung der vorliegenden Erfindung.
Figuren 11a und 11b Ansichten von auf dem Sicherungselement anbringbaren Verriegelungselementen gemäß unterschiedlichen Ausführungen der vorliegenden Erfindung.
Figuren 12a und 12b eine Ansicht eines Verrastelements und entsprechendem Gegenstück gemäß einer Ausführung der vorliegenden Erfindung.
Figuren 13a und 13b eine Ansicht von zwei Alternativen eines in der Durchgangsöffnung angeordneten Einlegeteils gemäß einer Ausführung der vorliegenden Erfindung.

In den nachfolgenden Figurenbeschreibungen sind gleiche Elemente bzw. Funktionen mit gleichen Bezugszeichen versehen.

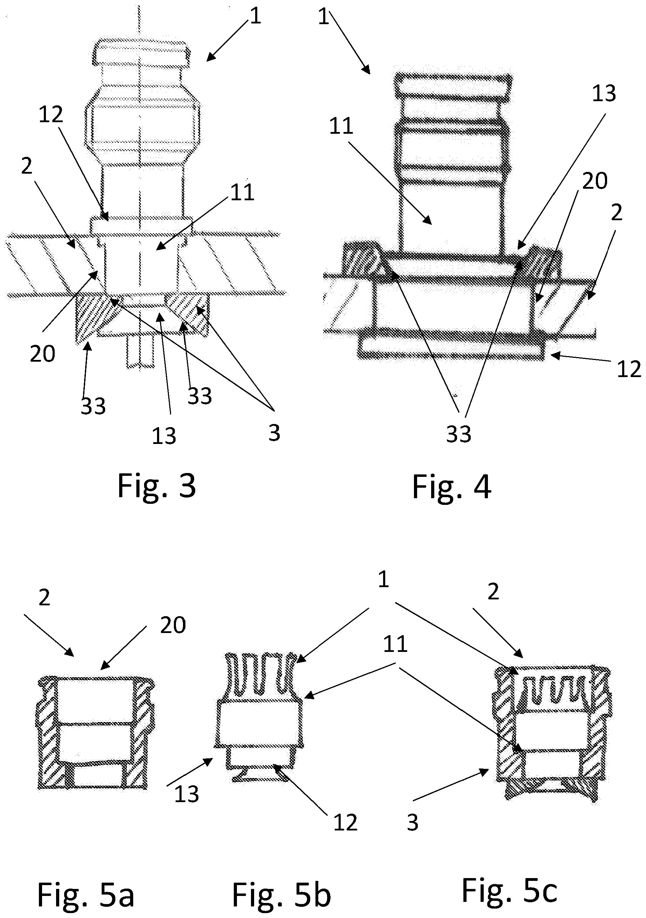

Figuren 3 und 4 zeigen Schnittansichten unterschiedlicher prinzipieller Ausführungsformen von erfindungsgemäßen HF-Steckverbindungen. Gezeigt sind jeweils eine als HF-Steckelement dienende HF-Buchse 1, deren Befestigungshals 11 in eine Durchlassöffnung 20 einer Montagewand, die hier als Antennendeckel 2 ausgeführt ist, bis zum Anschlag des Abschluss-Stegs 12 gesteckt ist. Um das Sicherungselement 3 auf die HF-Buchse aufzustecken verfügen die HF-Buchsen 1 beider Ausführungsformen über einen Verbindungsbereich 13, der ein

Einklicken des Sicherungselements 3 ermöglicht, so dass dieses nicht in axialer Richtung verrutschen kann. In beiden Figuren 3 und 4 ist das Sicherungselement 3 mit abgeschrägten Kanten 33 gezeigt, da hier die beste Flächenpressung erfolgt und somit die kleinste Spielfreiheit erreicht wird. Die Form des Sicherungselements 3 kann an die Form des Verbindungsbereichs 13 angepasst werden. Wichtig ist, dass das Sicherungselement 3 derart an dem Verbindungsbereich 13 der HF-Buchse 1 angebracht werden kann, dass eine Bewegung der HF-Buchse in axialer Richtung, also aus dem Antennendeckel heraus, und auch eine Torsion, also Drehung der Buchse in dem Antennendeckel 2 nicht möglich sind, also eine spielfreie Verbindung zwischen HF-Buchse 1 und Antennendeckel 2 erzielt wird.

Die in Figuren 3 und 4 gezeigten HF-Buchsen 1 unterschieden sich darin, dass die in Figur 3 gezeigte HF-Buchse 1 von oben in den Antennendeckel 2 gesteckt wird. Die in Figur 4 gezeigte HF-Buchse 1 wird von unten in den Antennendeckel 2 gesteckt, was den Effekt hat, dass bei axialen Kräften in Richtung Oberseite des Deckels der Abschluss-Steg 12 ein Herausrutschen der HF-Buchse 1 verhindert. Dieser Vorteil kann vor allem dann ausgenutzt werden, wenn nach Endmontage die Oberseite des Antennendeckels 2 nach unten gerichtet ist, so dass alleine schon die Gewichtskraft eines angesteckten Kabels eine axiale Kraft nach unten auf die HF-Buchse ausübt.

Die beiden Ausführungsformen unterscheiden sich ferner dadurch, dass das in Figur 3 gezeigte erfindungsgemäße Sicherungselement 3 auf der Seite des Antennendeckels 2 angeordnet ist, die nach Endmontage nicht mehr von außen sichtbar ist. Das erfindungsgemäße Sicherungselement 3 der in Figur 4 gezeigten Ausführungsform ist hingegen nach Endmontage auf der Außenseite bzw. Oberseite des Antennendeckels 2 sichtbar.

Ferner kann je nach Ausführungsform das Sicherungselement 3 nicht von der Seite über den Befestigungshals 11 gesteckt werden, sondern von oben (in den Figuren nicht gezeigt). Hierzu ist es bevorzugt ringförmig mit einer Öffnung auf seiner Oberseite auf, um die Buchse freizuhalten bzw. darüber gesteckt werden zu können. Ferner ist es derart ausgebildet, dass es an seiner Unterseite, mit der es an den Verbindungsbereich 13 dem HF-Steckelement 1 geklemmt wird, eine Form aufweist, die eine Sicherung des HF-Steckelements 1 vor Bewegungen in axialer Richtung sowie vor Drehbewegungen darstellt, also eine spielfreie Verbindung erreicht. Bei dieser Ausführungsform muss das Material des Sicherungselements 3 vor allem elastische Eigenschaften aufweisen, da es stark gedehnt werden muss, um über das Steckelement geschoben werden zu können. Es muss aber auch die Eigenschaft haben, wieder in seine Ausgangsform zurückzukehren, um die gewünschten Halteeigenschaften zu erfüllen. Bevorzugt wird diese Ausführung des Sicherungselements 3 gewählt, wenn die in Figur 4 gezeigte Variante der HF-Steckverbindung verwendet wird, also das Sicherungselement 3 nach der Endmontage sichtbar ist. Zusätzlich zu der benötigten Elastizität ist hier bei der Wahl des Materials für das Sicherungselement wichtig, dass es eine gewisse Wetterfestigkeit aufweist, da es in dieser Ausführungsform außen angebracht ist und somit unterschiedlichsten Umweltbedingungen wie z.B. Eis, Hagel, UV-Licht oder Wasser ausgesetzt ist. Wenn die in Figur 3 gezeigte Variante gewählt wird, muss das Sicherungselement 3 auf dem Befestigungshals 11 angebracht werden, bevor weitere Verbindungen an der Unterseite des HF-Steckelements 1, z.B. Kabel, angebracht werden.

Figuren 5a bis 5c zeigen eine alternative Ausführungsform der erfindungsgemäßen HF-Steckverbindung. Hier ist das HF-Steckelement 1 keine HF-Buchse, sondern lediglich die elektrische Baugruppe, die sich normalerweise im Inneren der mechanischen Baugruppe der HF-Buchse befindet, siehe Figur 5b. Die mechanische Baugruppe ist derart gebildet, dass sie bereits in der Montagewand 2 der HF-Baugruppe, also beispielsweise der Antenne, fixiert ist, also einstückig ausgebildet ist und kann mit einem nicht-leitenden Material wie Kunststoff umspritzt sein. Dies ist in Figur 5a gezeigt.. Die elektrische Baugruppe, z.B. zumindest der Innen- und Außenleiter der Antenne, wird in die in Figur 5a gezeigte Montagewandkombination eingeführt und mit dem erfindungsgemäßen Sicherungselement 3 gesichert, wie in Figur 5c gezeigt. Die Anordnung des-HF-Steckelements kann wie in Figuren 3 und 4 gezeigt von oben oder von unten erfolgen. Dies hängt davon ab, wie die Montagewandkombination hergestellt wurde.

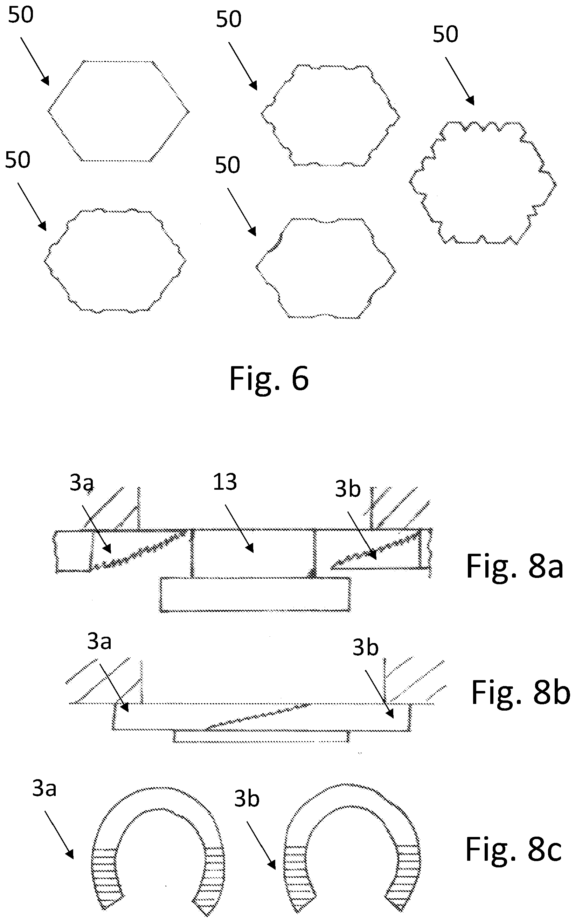

Figur 6 zeigt beispielhafte Schnittansichten einer Struktur 50 des Befestigungshalses 11 bzw. des Inneren der Durchlassöffnung 20 der Montagewand der HF-Baugruppe 2 gemäß unterschiedlichen Ausführungen der vorliegenden Erfindung. Wie oben beschrieben können sowohl der Befestigungshals 11 als auch die Innenseite der Durchlassöffnung 20 der Montagewand der HF-Baugruppe 2 eine Struktur 50 aufweisen, um eine spielfreie Befestigung des HF-Steckelements 1 an die Montagewand der HF-Baugruppe 2 zu ermöglichen. Beispielsweise kann die Struktur als ein Sechskant ausgebildet sein, der bei Einstecken in die Durchlassöffnung 20 die Innenseite der Durchlassöffnung 20 bearbeitet, so dass Material davon abgetragen bzw. abgeschabt oder verformt bzw. verpresst wird. Wenn die Struktur 50 auf dem Befestigungshals 11 angebracht ist, schabt die Struktur 50 einen Teil der Innenseite der Durchlassöffnung 20 der Montagewand der HF-Baugruppe 2 ab. Wenn die Durchlassöffnung 20 die Struktur 50 aufweist, wird ein Teil davon durch das Einstecken des Befestigungshalses 11 abgetragen bzw. abgeschabt oder verformt bzw. verpresst, da dieser eine Form aufweist, die gewährleistet, dass er beim Einstecken einen Teil der Struktur 50 der Durchlassöffnung abträgt bzw. abschabt. Das heißt, dass der Befestigungshals einen zumindest geringfügig größeren Durchmesser als die Durchlassöffnung 30 aufweisen muss. Durch beide Arten der Anbringung der Struktur 50 wird gewährleistet, dass eine spielfreie Verbindung zwischen HF-Steckelement 1 und Montagewand der HF-Baugruppe 2 entsteht. Weitere Beispiele für erfindungsgemäße Strukturen 50 sind ebenfalls in Figur 6 gezeigt, welche die oben vorgegebenen Anforderungen erfüllen. Figur 6 zeigt lediglich Beispiele von Strukturen. Jede weiter denkbare Struktur könnte anstelle der dargestellten verwendet werden.Diese Strukturen 50 können für sich alleine oder in Kombination verwendet werden. Hier sind beispielsweise Strukturen 50 gezeigt, die eine Zickzacklinie, ein Trapez, einen Halbkreis, ein Rechteck oder ein Quadrat aufweisen. Es können jegliche Formen, auch komplexe Formen, verwendet werden, sofern bevorzugt Vertiefungen bzw. Erhöhungen in dem Befestigungshals 11 bzw. der Innenseite der Durchlassöffnung 20 angeordnet sind, die durch Abtragen bzw. Abschaben oder Verformen bzw. Verpressen eine spielfreie Verbindung zwischen HF-Steckelement 1 und Montagewand der HF-Baugruppe 2 ermöglichen. Alternativ kann auch die Montagewand der HF-Baugruppe eine schräge Kontur aufweisen, die eine axiale Vorspannung des HF-Steckelements über das Sicherungselement erzeugt.

Alle gezeigten Strukturen 50 können auf dem Befestigungshals 11 oder der Innenseite der Durchlassöffnung 20 angeordnet sein. Die Entscheidung, wo die Struktur 50 angeordnet wird, hängt von Faktoren wie z.B. Herstellungskosten, Einfachheit der Herstellung oder Material ab und wird vom Fachmann entsprechend der gewünschten Anwendung getroffen.

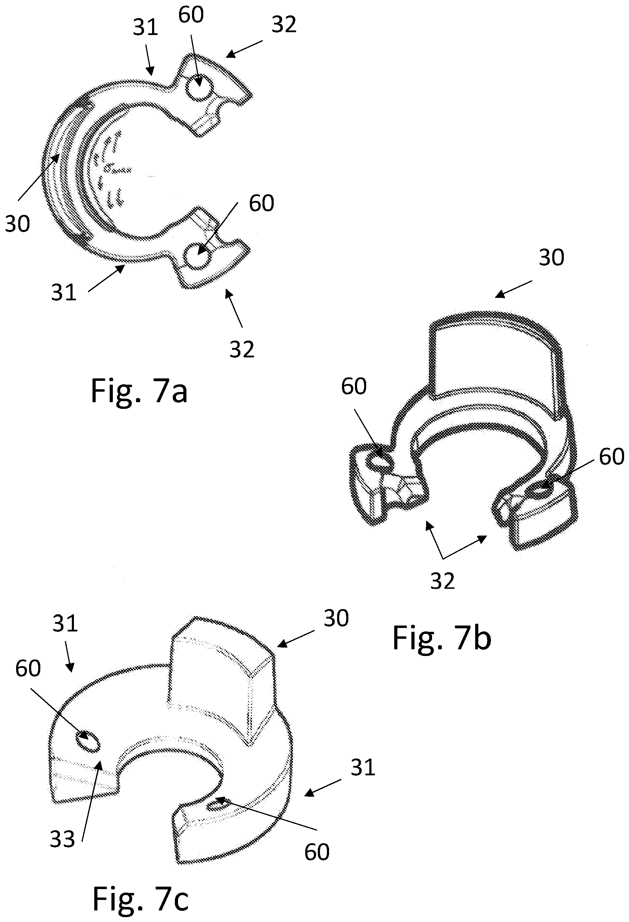

Figur 7a zeigt eine Draufsicht auf ein Sicherungselement einer HF-Steckverbindung gemäß einer Ausführung der vorliegenden Erfindung. In dieser Ausführungsform ist das Sicherungselement 3 in der Form eines Hufeisens ausgeführt und weist an der Seite gegenüber der Öffnung einen Steg 30 auf. Dieser Steg dient dazu, die Kräfte σₘₐₓ, die beim Auseinanderziehen bzw. -biegen der beiden Federarme 31 punktuell auf den Bereich, an dem der Steg 30 angebracht ist, wirken, auf einen größeren Bereich zu verteilen. Zusätzlich weist das Sicherungselement 3 in Figur 7a eine Verbreiterung 32 der Arme 31 an den jeweiligen zur Öffnung hin zeigenden Enden auf. Dies hat den Vorteil, dass hierdurch die Fläche zum Klicken bzw. Klemmen größer ist und dadurch eine größere Haltekraft auf den Befestigungshals 11 der HF-Buchse ausgeübt werden kann. Bei dem gezeigten Sicherungselement können ein Arm oder beide Arme als Federarme dienen.

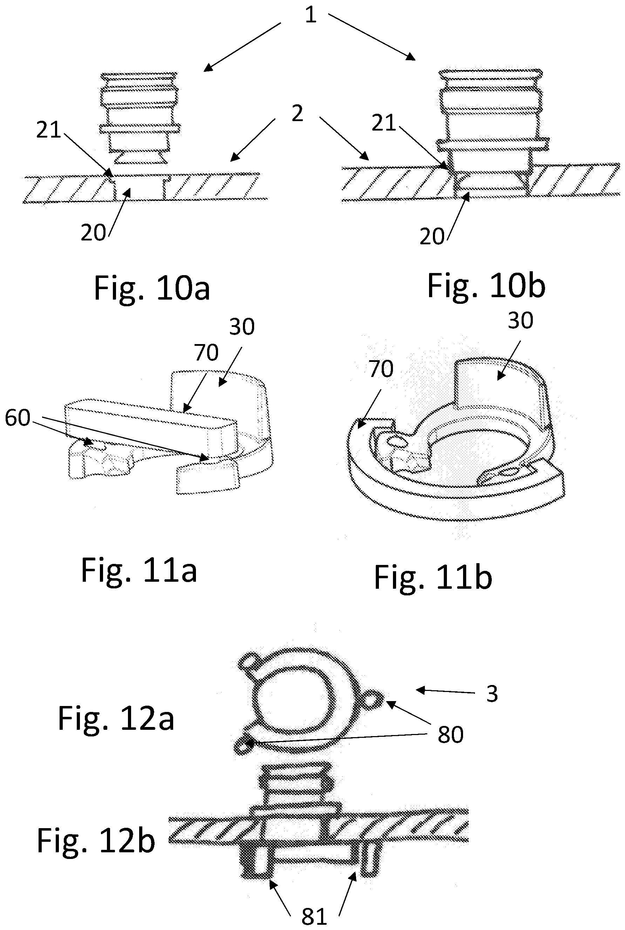

Zusätzlich weist das Sicherungselement 3 zusätzlich Montagehilfen 60 auf, die an der Verbreiterung 32 der Arme 31 angebracht sind. Die Montagehilfen 60 sind hier Löcher, durch deren Öffnung ein geeignetes Werkzeug gesteckt werden kann, um das Auseinanderziehen der Arme 31 zu erleichtern. Zusätzlich können diese Löcher als Halterung für ein Verriegelungselement dienen. Beispiele für Verriegelungselemente sind in Figuren 11a und 11b gezeigt. Die Form des Verriegelungselements wird der Form der Verbreiterung 32 der Arme 31 bzw. der Art der Öffnung angepasst. Bei dem gezeigten Sicherungselement können ein Arm oder beide Arme als Federarme dienen.

Figur 7b zeigt eine perspektivische Ansicht eines Sicherungselements 3 einer HF-Steckverbindung gemäß Fig 7a. Hier ist das Sicherungselement 3 wie bei den vorhergehenden Ausführungen in Form eines Hufeisens mit einem Steg 30 an der der Öffnung gegenüber liegenden Seite ausgebildet. Zusätzlich weist das Sicherungselement 3 an den ins Innere der Hufeisenform zeigenden Bereichen der Arme 31 abgeschrägte Kanten 33 auf, die ein vereinfachtes Einklicken des Sicherungselements 3 ermöglichen. Bei dem gezeigten Sicherungselement können ein Arm oder beide Arme als Federarme dienen.

Figur 7c zeigt eine perspektivische Ansicht einer alternativen Ausführungsform eines Sicherungselements 3 einer HF-Steckverbindung gemäß der vorliegenden Erfindung. Hier ist das Sicherungselement 3 wie bei den vorhergehenden Ausführungen in Form eines Hufeisens mit einem Steg 30 an der der Öffnung gegenüber liegenden Seite ausgebildet. Auch weist das Sicherungselement 3 an den ins Innere der Hufeisenform zeigenden Bereichen der Arme 31 abgeschrägte Kanten 33 auf, die ein vereinfachtes Einklicken des Sicherungselements 3 ermöglichen. Bei dem gezeigten Sicherungselement können ein Arm oder beide Arme als Federarme dienen. Das Sicherungselement 3 dieser Ausführungsform weist ebenfalls Löcher als Montagehilfen 60 auf, hat aber keine Verbreiterung der Arme 31 wie die Ausführungsbeispiele in Figuren 7a und 7b.

In Figuren 8a bis 8c sind Ansichten eines auf dem HF-Steckelement 1 angebrachten Sicherungselements 3, das aus zwei Teilen 3a und 3b besteht und stufige bzw. sägezahnförmige schräge Kanten aufweist, zur Veranschaulichung dargestellt. Die abgeschrägten stufigen bzw. sägezahnförmigen Kanten erleichtern das Aufstecken der Teile 3a und 3b des Sicherungselements, da das Aufstecken nicht Kante auf Kante erfolgt, was eine höhere Reibung verursachen würde. Die beiden Teile 3a und 3b des Sicherungselements werden von zwei Seiten auf den Verbindungshals 13 gesteckt und verrasten beim Aufstecken derart miteinander, dass ein Ring um den Verbindungshals 13 entsteht. Abgeschrägte Kanten können auch bei Sicherungselementen ohne Öffnung verwendet werden, die beispielsweise von oben auf das HF-Steckelement 1 aufgesteckt werden (nicht gezeigt). Bei dem gezeigten Sicherungselement können ein Arm oder beide Arme als Federarme dienen.

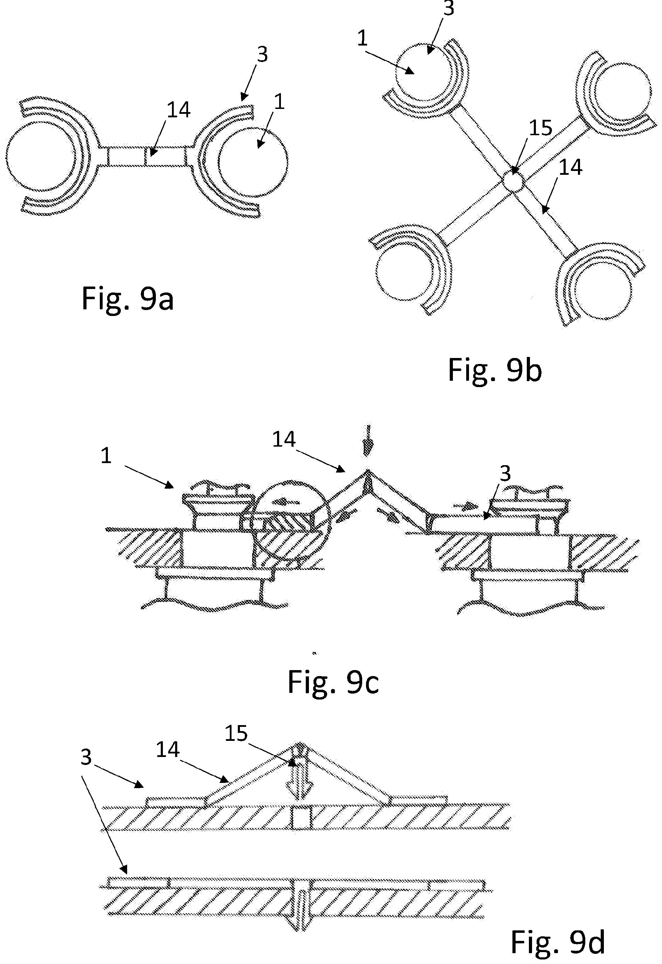

Figuren 9a bis 9d zeigen Ansichten von mehreren mit einem Verbindungssteg 14 verbundenen Sicherungselementen 3. Figuren 9a und 9b zeigen eine Draufsicht auf zwei bzw. vier miteinander über Verbindungsstege 14 verbundene Sicherungselemente. In Figur 9c ist gezeigt, wie der Verbindungssteg 14 einen Knick bildet, um in den Verbindungsweg zwischen zwei HF-Steckelementen 1 eingeführt werden zu können. Durch Drücken auf den Knick strecken sich die beiden Arme des Verbindungsstegs 14 und die an den beiden Enden des Verbindungsstegs 14 angeordneten Sicherungselemente 3 klicken in die jeweiligen HF-Steckverbindungen 1 ein. Figur 9d zeigt ein Prinzip einer Zusatzsicherung 15, hier als Stift mit Widerhaken ausgeführt. Der Stift wird in eine Durchgangsbohrung in der Montageplatte gesteckt klickt mit seinen Widerhaken auf der Rückseite der Montageplatte 2 ein. Durch die Zusatzsicherung 15 ist sichergestellt, dass eine feste Verbindung mit der Montageplatte entsteht, so dass der Verbindungssteg aufgrund der an ihm anliegenden Spannung nicht in seine Ausgangsposition zurückkehren kann bzw. die Sicherungselemente aus den HF-Steckverbindungen ausgeklickt werden.

Figuren 10a und 10b zeigen eine Ansicht einer Einführhilfe 21 für eine HF-Steckverbindung gemäß einer Ausführung der vorliegenden Erfindung. Die Einführhilfe 21 ist eine definierte Struktur, die gemäß dem Schlüssel-Schloss-Prinzip an dem Befestigungshals 11 und an einem Bereich nahe der, direkt an der oder in der Durchlassöffnung 20 der Montagewand der HF-Baugruppe 2 angeordnet ist. Die Einführhilfe 21 dient dazu, das Einstecken des HF-Steckelements 1 in die Montagewand der HF-Baugruppe 2 zu erleichtern bzw. eine Ausrichtung für die Montage des HF-Steckelements 1 vorzugeben. In Figuren 10a und 10b ist die Einführhilfe 21 direkt in der Durchlassöffnung 20 als eine Ausnehmung ausgebildet, die dem Durchmesser des Befestigungshalses 11 entspricht. Das HF-Steckelement, hier als HF-Buchse 1 dargestellt, kann also derart in der Öffnung vorpositioniert werden, dass in z.B. einem nachfolgenden Montageschritt die HF-Buchse 1 lediglich in die Durchlassöffnung 20 eingedrückt oder eingeschlagen werden muss. Eine solche Einführhilfe 21 kann beispielsweise nötig sein, wenn eine Vorpositionierung der Komponenten für die Montage erfolgen soll. Auch kann es sein, dass eine vorgegebene Montagereihenfolge eingehalten werden muss, so dass das HF-Steckelement bzw. die HF-Buchse 1 aufgrund der Einführhilfe 21 nur bei einem bestimmten vorgegebenen Montageschritt montiert werden kann. Auch kann eine Einführhilfe 21 aus Platzgründen vorgesehen sein, nämlich wenn beispielsweise der Platz um das HF-Steckelement herum nicht ausreicht, ein Positionierungswerkzeug einzusetzen. Durch die Einführhilfe 21 kann das HF-Steckelement trotzdem in der richtigen Position montiert werden.

In Figuren 11a und 11b sind beispielhaft Ansichten von auf dem Sicherungselement 3 anbringbaren Verriegelungselementen 70 gezeigt. Figur 11a zeigt eine in die Montagehilfen 60, welche hier jeweils ein Loch ist, an den Enden der Arme 31 eingesteckte Klammer bzw. Balken. Diese Klammer kann zusätzlich mit einem (nicht gezeigten) Füllsteg versehen sein, der die Öffnung des Sicherungselements 3 ausfüllt und so für zusätzliche Stabilität sorgt. In Figur 11b ist eine Klammer auf die Arme 31 von der Seite der Öffnung des Sicherungselements aufgesteckt, die in die Verbreiterung der Arme 31 einklickt und somit eine zusätzliche Sicherung gegen Herausklicken des Sicherungselements bereitstellt. In einer (nicht gezeigten) alternativen Ausführung des Verriegelungselements 70 kann ein Ring um das Sicherungselement 3 angeordnet sein, der dieses in Form hält oder sogar eine Kraft darauf ausübt, die das Sicherungselement 3 weiter zusammen drückt.

In Figuren 12a und 12b ist eine Ansicht eines Verrastelements 80 und eines entsprechendem Gegenstücks 81 gemäß einer Ausführung der vorliegenden Erfindung gezeigt. Figur 12a zeigt ein an dem Sicherungselement 3 angeordnetes Verrastelement 80 gemäß einer Ausführung der vorliegenden Erfindung. Das Verrastelement 80 ist beispielsweise an den Enden der Arme 31 zur Öffnung des Sicherungselements 3 hin angeordnet. Figur 12b zeigt ein auf der Montagewand der HF-Baugruppe 2 angeordnetes entsprechendes Gegenstück 81 zu dem in Figur 12a gezeigten Verrastelement 80, das dazu dient, dass das Sicherungselement 3 nach Anbringen derart mit dem Gegenstück 81 verrastet, dass es sich nicht mehr drehen kann. In Figuren 12a und 12b ist ein solches Verrastelement 80 und das Gegenstück 81 beispielhaft dargestellt. Es sind jedoch jegliche Formen verwendbar, die zur Erfüllung der genannten Aufgabe geeignet sind.

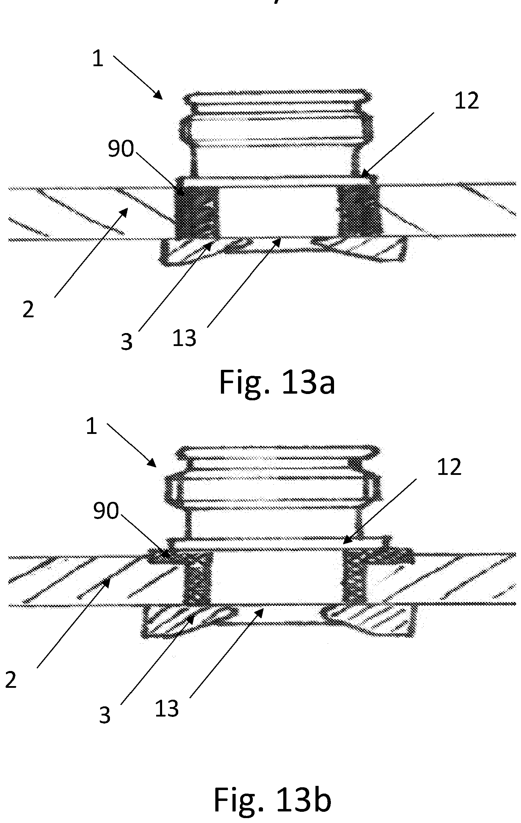

Figur 13a und 13b zeigen zwei Alternativen eines in der Durchgangsöffnung 20 der Montagewand der HF-Baugruppe 2 angeordneten und eingangs beschriebenen nicht-leitenden Einlegeteils 90. Das Einlegeteil 90 kann entweder in der Durchgangsöffnung 20 befestigt sein, oder es kann am Befestigungshals 11 angeordnet sein und mit diesem in die Durchgangsöffnung geschoben werden. In beiden Fällen muss das Einlegeteil 90 eine Struktur 50 aufweisen, die beim Einstecken in die Durchgangsöffnung 20 abgetragen bzw. abgeschabt oder verformt bzw. verpresst wird. Dies ist dadurch begründet, dass bei der Notwendigkeit, ein Einlegeteil 90 zu verwenden, sowohl die Montagewand der HF-Baugruppe 2 als auch das HF-Steckelement 1 aus einem leitenden Material bestehen, bei dem ein Abtragen bzw. Abschaben oder Verformen bzw. Verpressen der Struktur nur sehr schwer möglich wäre. Das Einlegeteil ist derart geformt, dass es leitende Verbindungen zwischen der Montagewand und dem HF-Steckelement vermeidet, wie in den in Figuren 13a und 13b gezeigten Alternativen dargestellt.

Aus der Beschreibung der Erfindung geht hervor, dass vor allem bezüglich der verwendeten Struktur viele Freiheitsgrade vorhanden sind, um das Prinzip der Erfindung zu verwirklichen. Aus diesem Grund können nicht alle Alternativen beschrieben werden, fallen aber dennoch unter den Schutzbereich dieser Erfindung. Die einzeln beschriebenen Merkmale können miteinander kombiniert werden, um den für die gewünschte Anwendung benötigten Sicherheitsanforderungen zu genügen.

### Bezugszeichenliste

- 1: HF-Buchse bzw. HF-Steckelement
- 11: Befestigungshals
- 12: Abschluss-Steg
- 13: Verbindungsbereich
- 14: Verbindungssteg
- 15: Zusatzsicherung
- 2: Montagewand, z.B. Antennendeckel
- 20: Durchlassöffnung
- 21: Einführhilfe

- 3: Sicherungselement
- 3a, 3b: Teil 1 und Teil 2 eines Sicherungselements
- 30: Steg
- 31: Federarme
- 32: Verbreiterung der Federarme an Öffnung
- 33: Schräge Kanten

- 300: Mutter
- 400: Montageplatte
- 401: Schrauben

- 50: Struktur
- 60: Montagehilfe
- 70: Verriegelungselement
- 80: Verrastelement
- 81: Gegenstück zum Verrastelement
- 90: nicht-leitendes Einlegeteil

## Patentansprüche

1. HF-Baugruppe, aufweisend eine Montagewand (2) und zumindest ein HF-Steckelement (1) mit einem Befestigungshals (11), der in eine an der Montagewand (2) für jedes HF-Steckelement (1) angeordnete Durchlassöffnung (20) eingesteckt ist, und zumindest ein als federndes Element ausgebildetes Sicherungselement (3) je HF-Steckelement (1), das zwischen der Montagewand (2) und einem an den Befestigungshals (11) angrenzenden Verbindungsbereich (13) des HF-Steckelements (1) aufgesteckt ist, wobei ein dem HF-Steckelement (1) zugewandter Bereich des Sicherungselements (3) eine Schräge (33) aufweist, und wobei der dem Sicherungselement (3) zugewandte Bereich des Verbindungsbereichs (13) eine korrespondierende Schräge aufweist, um das HF-Steckelement (1) aufgrund einer Vorspannung des Sicherungselements (3) an der Montagewand (2) spielfrei zu fixieren.

2. HF-Baugruppe nach Anspruch 1, wobei das Sicherungselement (3) ringförmig ausgebildet ist.

3. HF-Baugruppe nach Anspruch 1, wobei das Sicherungselement (3) eine Umfangsöffnung zum seitlichen Aufstecken, sowie zumindest einen Federarm (31), aufweist.

4. HF-Baugruppenach Anspruch 3, wobei an dem der Umfangsöffnung gegenüberliegenden Bereich ein Steg (30) angebracht ist.

5. HF-Baugruppe nach Anspruch 3 oder 4, wobei das Sicherungselement (3) zwei Federarme (31) aufweist und wobei jeder der Federarme (31) zur Umfangsöffnung hin dünner wird, oder
wobei jedes offene Ende jedes der Federarme (31) dicker ist als der Federarm (31), oder wobei jeder der Federarme (31) bis zu einem Bereich seines offenen Endes zur Umfangsöffnung hin dünner wird und im Bereich des offenen Endes wieder dicker wird.

6. HF-Baugruppe nach einem der Ansprüche 3 bis 5, wobei das Sicherungselement (3) zwei Federarme (31) aufweist, an deren offenen Enden ein Verriegelungselement (70) angeordnet ist, um ein Ausschnappen des Sicherungselements (3) zu verhindern.

7. HF-Baugruppe nach einem der Ansprüche 1 bis 6, wobei zumindest ein Bereich des Sicherungselements (3) eine Montagehilfe (60) aufweist.

8. HF-Baugruppe nach einem der vorhergehenden Ansprüche, wobei das Sicherungselement (3) über einen daran angebrachten federnden Verbindungssteg (14) mit einem oder mehreren anderen Sicherungselementen (3) verbunden ist, wobei mehrere Verbindungsstege (14) mit zugehörigen Sicherungselementen (3) auch über Kreuz verbindbar sind.

9. HF-Baugruppe nach einem der vorhergehenden Ansprüche, wobei der Befestigungshals (11) des HF-Steckelements (1) oder die Durchlassöffnung (20) eine Struktur (50) aufweisen, wobei beim Einstecken des Befestigungshalses (11) in die Durchlassöffnung (20) ein Teil des Materials der Durchlassöffnung (20) abgetragen oder verformt wird.

10. HF-Baugruppe nach Anspruch 9, wobei die Struktur (50) zumindest einen abgeflachten oder einen abgeschrägten Bereich aufweist, oder wobei die Struktur (50) ein Mehrkant, insbesondere ein Dreikant oder ein Fünfkant oder ein Sechskant ist.

11. HF-Baugruppe nach Anspruch 10, wobei die Struktur (50) zumindest einen Bereich aufweist, der Erhöhungen und Vertiefungen aufweist.

12. HF-Baugruppe nach Anspruch 11, wobei die Erhöhungen und Vertiefungen die Form von Rillen, Dreiecken, Quadraten, Trapezen, Halbkreisen und/oder eine Kombination daraus.

13. HF-Baugruppe nach einem der vorhergehenden Ansprüche, wobei die Montagewand (2) in einem Bereich nahe jeder Durchlassöffnung (20) eine Ausnehmung aufweist, die derart angeordnet ist, dass ein auf dem Verbindungsbereich (13) aufgestecktes Sicherungselement (3) auf der anderen Seite der Montagewand (2) optisch sichtbar ist.

14. HF-Baugruppe nach einem der vorhergehenden Ansprüche, wobei das zumindest eine HF-Steckelement (1) eine HF-Buchse ist.

15. HF-Baugruppe nach einem der vorhergehenden Ansprüche, wobei die Montagewand (2) ein Antennendeckel ist.

## Claims

1. An HF module having a mounting panel (2) and at least one HF plug element (1) with a fastening neck (11) plugged into a through-opening (20) arranged on the mounting panel (2) for each HF plug element (1), and for each HF plug element (1), at least one securing element (3) designed as a flexible element that is plugged on between the mounting panel (2) and a connecting region (13) of the HF plug element (1) adjacent to the fastening neck (11), wherein a region of the securing element (3) facing the HF plug element (1) has a slope (33), and wherein the region of the connecting region (13) facing the securing element (3) has a corresponding slope to secure the HF element (1) on the mounting panel (2) without any play due to a pretension of the securing element (3).

2. The HF module according to claim 1, wherein the securing element (3) is designed in the form of a ring.

3. The HF module according to claim 1, wherein the securing element (3) has a peripheral opening for lateral attachment and at least one spring arm (31).

4. The HF module according to claim 3, wherein a web (30) is attached to the region opposite the peripheral opening.

5. The HF module according to claim 3 or 4, wherein the securing element (3) has two spring arms (31), and wherein each of the spring arms (31) becomes thinner towards the peripheral opening, or
wherein each open end of each of the spring arms (31) is thicker than the spring arm (31), or
wherein each of the spring arms (31) becomes thinner up to the region of its open end toward the peripheral opening and becomes thicker again in the region of the open end.

6. The HF module according to any one of claims 3 to 5, wherein the securing element (3) has two spring arms (31), a locking element (70) being arranged on their open ends to prevent the securing element (3) from becoming unsnapped.

7. The HF module according to any one of claims 1 to 6, wherein at least one region of the securing element (3) has a mounting aid (60).

8. The HF module according to any preceding claim, wherein the securing element (3) is connected to one or more other securing elements (3) by means of a flexible connecting web (14) attached thereto, wherein a plurality of connecting elements (14) can also be connected crosswise to respective securing elements (3).

9. The HF module according to any preceding claim, wherein the fastening neck (11) of the HF plug element (1) or the through-opening (20) has a structure (50), wherein some of the material on the through-opening (20) is cut away or deformed when the fastening neck (11) is inserted into the through-opening (20).

10. The HF module according to claim 9, wherein the structure (50) has at least one flattened or sloping region; or wherein the structure (50) is a polygon, in particular a triangle or a pentagon or a hexagon.

11. The HF module according to claim 10, wherein the structure (50) has at least one region with elevations and recesses.

12. The HF module according to claim 11, wherein the elevations and recesses are in the form of grooves, triangles, squares, trapezoids, semicircles and/or a combination thereof.

13. The HF module according to any preceding claim, wherein the mounting panel (2) has a recess in a region near the through-opening (20), said recess being positioned in such a way that a securing element (3) plugged on to the connecting region (13) is optically visible on the other side of the mounting panel (2).

14. The HF module according to any preceding claim, wherein the at least one HF plug element (1) is an HF bushing.

15. The HF module according to any preceding claim, wherein the mounting panel (2) is an antenna cover.

## Revendications

1. Module HF présentant une paroi de montage (2) et au moins un élément d'enfichage (1) pourvu d'un collet de fixation (11) qui est introduit dans une ouverture traversante (20) ménagée pour chaque élément d'enfichage HF (1) dans la paroi de montage (2), ainsi qu'au moins un élément d'arrêt (3) par élément d'enfichage HF (1), lequel élément d'arrêt est conçu sous la forme d'un élément élastique et monté entre la paroi de montage (2) et une zone de liaison (13) de l'élément d'enfichage HF (1) contiguë au collet de fixation (11), une zone de l'élément d'arrêt (3) tournée vers l'élément d'enfichage HF (1) présentant une inclinaison (33), et la zone de la zone de liaison (13) tournée vers l'élément d'arrêt (3) présentant une inclinaison correspondante pour fixer sans jeu sur la paroi de montage (2) l'élément d'enfichage HF (1) en raison d'une précontrainte de l'élément d'arrêt (3).

2. Module HF selon la revendication 1, l'élément d'arrêt (3) étant de forme annulaire.

3. Module HF selon la revendication 1, l'élément d'arrêt (3) présentant une ouverture périphérique pour son emboîtement latéral, ainsi qu'au moins un bras élastique (31).

4. Module HF selon la revendication 3, un contrefort (30) étant placé sur une zone opposée à l'ouverture périphérique.

5. Module HF selon la revendication 3 ou 4, l'élément d'arrêt (3) présentant deux bras élastiques (31) et chacun des bras élastiques (31) devenant plus mince vers l'ouverture périphérique, ou
chaque extrémité ouverte de chaque bras élastique (31) étant plus épaisse que le bras élastique (31), ou chaque bras élastique (31) devenant plus mince vers l'ouverture périphérique jusqu'à une zone de son extrémité ouverte et à nouveau plus épais dans la zone de l'extrémité ouverte.

6. Module HF selon l'une des revendications 3 à 5, l'élément d'arrêt (3) présentant deux bras élastiques (31) aux extrémités ouvertes desquels est disposé un élément de verrouillage (70) pour éviter un déboîtement de l'élément d'arrêt (3).

7. Module HF selon l'une des revendications 1 à 6, une zone de l'élément d'arrêt (3) présentant un auxiliaire de montage (60).

8. Module HF selon l'une des revendications précédentes, l'élément d'arrêt (3) étant relié à un autre ou à plusieurs autres éléments d'arrêt (3) par l'intermédiaire d'une barrette de liaison élastique (14) montée sur l'élément d'arrêt (3), plusieurs barrettes de liaison (14) pouvant également être reliées en croix à des éléments d'arrêt (3) correspondants.

9. Module HF selon l'une des revendications précédentes, le collet de fixation (11) de l'élément d'enfichage HF (1) ou l'ouverture traversante (20) présentant une structure, une partie du matériau de l'ouverture traversante (20) étant enlevée ou déformée pendant l'insertion du collet de fixation (11) dans l'ouverture traversante (20).

10. Module HF selon la revendication 9, la structure (50) présentant au moins une zone aplatie ou une zone oblique, ou la structure (50) étant un polygone, plus particulièrement un triangle ou un pentagone ou un hexagone.

11. Module HF selon la revendication 10, la structure (50) possédant au moins une zone qui présente des reliefs et des creux.

12. Module HF selon la revendication 11, les reliefs et les creux se présentant sous la forme de rainures, de triangles, de carrés, de trapèzes, de demi-cercles et/ou d'une combinaison de ceux-ci.

13. Module HF selon l'une des revendications précédentes, la paroi de montage (2) présentant dans une zone proche de chaque ouverture traversante (20) un évidement qui est disposé de telle sorte qu'un élément d'arrêt (3) emboîté dans la zone de liaison (13) est visible de l'autre côté de la paroi de montage (2).

14. Module HF selon l'une des revendications précédentes, ledit au moins un élément d'enfichage HF (1) étant une prise HF.

15. Module HF selon l'une des revendications précédentes, la paroi de montage (2) étant un couvercle d'antenne.
